# FASCICULE DE BREVET EUROPEEN

(11) **EP 0 587 216 B1**
(45) Date de publication et mention de la délivrance du brevet: **16.04.1997**
(21) Numéro de dépôt: 93202449.0
(22) Date de dépôt: 19.08.1993
(51) Int. Cl.: C08L 23/02, C08L 3/14

(54) **Compositions polymériques pour la production d'articles soudables en haute fréquence, maître mélange pour la préparation de ces compositions et articles produits à partir de celles-ci**
Polymerzusammensetzungen zur Herstellung hochfrequenzverschweissbarer Gegenstände, Masterbatch zur Herstellung dieser Zusammensetzungen und daraus hergestellte Gegenstände
Polymer compositions for the manufacture of high frequency sealable articles, masterbatch for the preparation of these compositions and articles made therefrom

(30) Priorité: 01.09.1992 BE 9200774
(43) Date de publication de la demande: 16.03.1994
(73) Titulaire: SOLVAY (Société Anonyme), B-1050 Bruxelles (BE)
(72) Inventeur: Dehennau, Claude, B-1410 Waterloo (BE); Depireux, Thierry, B-1410 Waterloo (BE); Claeys, Ivan, B-1981 Zemst(Hofstade) (BE)
(74) Mandataire: Meyers, Liliane

(56) Documents cités:
- EP-A- 0 408 501
- EP-A- 0 408 502
- WO-A-91/02025
- WO-A-91/16375
- WO-A-92/09414
- DE-A- 1 669 888

## Description

La présente invention concerne des compositions polymériques convenant particulièrement pour la production d'articles tels que notamment des films ou feuilles qui autorisent des soudures par la technique de soudage par induction en haute fréquence.

La propriété présentée par certaines matières thermoplastiques de permettre des soudures par la technique de soudage par induction en haute fréquence se révèle particulièrement intéressante du fait que cette technique permet des temps de soudage très courts tout en assurant des résistances de soudure élevées.

A titre d'exemples, cette propriété est notamment présente pour le polychlorure de vinyle souple ou semi-rigide et, dans une certaine mesure, pour le polychlorure de vinyle rigide, les polyamides 11 et 12, le polyméthacrylate de méthyle et les copolymères d'éthylène et d'acétate de vinyle contenant plus de 16 % en poids d'unités dérivées de l'acétate de vinyle. Des exemples de polymères convenant pour un soudage en haute fréquence sont, par ailleurs, mentionnés dans la page 2 de la demande de brevet WO-A-8607012 publiée le 4 décembre 1986.

Par contre, les polyoléfines n'acceptent pas un soudage en haute fréquence, ce qui les pénalise dans certains marchés et limite leurs débouchés.

Des recherches ont été, dès lors, entreprises pour trouver des systèmes à base de polyoléfines pouvant être soudés par cette technique et ont conduit notamment à la mise au point de mélanges de polyoléfines avec des polymères soudables en haute fréquence tels que les copolymères d'éthylène et d'acétate de vinyle et les polyamides.

Ainsi, dans le brevet US-A-3,336,173 publié le 15 août 1967, on revendique des compositions soudables en haute fréquence composées d'une polyoléfine et d'un polyamide.

De tels mélanges présentent toutefois certains défauts qui limitent leur utilisation. Ainsi,
- les mélanges polyoléfines-copolymères d'éthylène et d'acétate de vinyle sont opaques et présentent une résistance à la griffe faible
- les mélanges polyoléfines-polyamides 11 ou 12 sont seulement translucides et sont coûteux vu le prix des matières.

D'autres systèmes envisageables associent une polyoléfine et un amidon thermoplastique obtenu en plastifiant un amidon. En effet, de tels mélanges, qui nécessitent généralement le recours à un agent compatibilisant pour améliorer leurs propriétés mécaniques, sont soudables en haute fréquence si la teneur en amidon thermoplastique est très élevée.

Malheureusement, si la teneur en amidon thermoplastique est élevée, des bulles apparaissent au voisinage de la soudure en raison de la vaporisation de l'eau absorbée par l'amidon thermoplastique. Ces défauts disparaissent lorsqu'on réduit la teneur en amidon thermoplastique mais alors la résistance au délaminage de la soudure diminue de façon drastique. Il en résulte que la mise au point de compositions présentant une aptitude au soudage acceptable est très aléatoire.

Les documents EP-A-408501 et EP-A-408502, sans concerner le problème du soudage, décrivent des compositions présentant une bonne stabilité dimensionnelle en cas de moulage, qui comprennent de l'amidon déstructuré, au moins un polysaccharide modifié cationiquement (EP-A-408501) ou anioniquement (EP-A-408502), et optionnellement un polymère thermoplastique substantiellement insoluble dans l'eau, qui peut être notamment un copolymère d'éthylène et d'acétate de vinyle.

L'invention concerne, dès lors, des compositions polymériques pour la production d'articles soudables en haute fréquence comprenant :
- de 10 à 98 % en poids d'au moins une polyoléfine,
- de 1 à 60 % en poids d'au moins un amidon thermoplastique,
- de 0,5 à 30 % en poids d'au moins un agent de couplage choisi dans le groupe formé par les polyoléfines modifiées par greffage d'anhydride maléique et par les copolymères et terpolymères d'éthylène contenant des unités dérivées de l'anhydride maléique;
et contenant au moins un composé ionique dans une teneur telle que la concentration en anions et en cations dans les compositions soit de 0,002 à 5 moles/kg.

Par concentration en anions et en cations on entend désigner la somme, exprimée en moles, du nombre d'anions et du nombre de cations présents dans 1 kg de composition. Pour ce faire, tous les anions et cations sont pris en compte individuellement.

En général, on préfère que la teneur en composé ionique des compositions soit telle que la concentration en anions et en cations soit supérieure à 0,005 mole/kg.

De même, on préfère généralement que cette concentration ne dépasse pas 4 moles/kg.

Le composé ionique utilisable dans les compositions conformes à l'invention peut être un composé ionique quelconque.

Ainsi, par exemple, ce composé peut être constitué, en tout ou en partie, par l'amidon thermoplastique mis en oeuvre dans la composition ce dernier étant, dans ce cas, choisi dans le groupe formé par les amidons thermoplastiques cationiques et les amidons thermoplastiques anioniques.

Ces amidons thermoplastiques ioniques sont obtenus par plastification d'amidons ioniques.

De tels amidons sont décrits dans l'ouvrage "Starch : Chemistry and Technology" édité par R.L. WHISTLER et E.F. PASCHALL, Editions Academic Press, New York and London, volume 1, 1965, pages 451 à 455 et 467 à 469 et volume 2, 1967, pages 403 à 422.

Dans le cas de la mise en oeuvre d'amidons cationiques ou anioniques, il convient que le degré de substitution des fonctions hydroxyles de l'amidon par des radicaux porteurs de groupements ioniques soit suffisant pour que la concentration en ions neutralisants dans la composition soit située entre les valeurs spécifiées.

A titre d'amidons de ce type, on peut avantageusement mettre en oeuvre un amidon natif éthérifié de façon à remplacer en moyenne un groupement hydroxyle sur de 10 à 70 et de préférence sur environ 25 unités d'anhydroglucose par une fonction aminoalkyle qui lui confère des propriétés cationiques. Un amidon de ce type est, par ailleurs, commercialisé sous la marque **HI-CAT® 260** par la Société française ROQUETTE FRERES.

Un autre type d'amidon ionique que l'on peut mettre en oeuvre avantageusement est un amidon estérifié de façon à remplacer en moyenne un groupement hydroxyle sur de 10 à 70 et de préférence sur environ 25 unités d'anhydroglucose par un radical porteur d'une fonction carboxyle qui lui confère des propriétés anioniques.

D'autres amidons ioniques peuvent bien entendu également convenir.

Le composé ionique peut, par ailleurs, être un sel inorganique quelconque éventuellement hydraté qui peut être incorporé tel quel ou sous forme d'une solution aqueuse. A titre de tels sels, on peut citer notamment le chlorure de sodium, le chlorure de potassium, le chlorure d'ammonium et leurs mélanges qui sont préférés par la demanderesse, cette liste étant toutefois purement illustrative et non limitative. Cependant, dans les cas des composés inorganiques, la demanderesse préfère utiliser des sels monovalents.

Le composé ionique peut, enfin, être un sel organique quelconque éventuellement hydraté qui peut également être incorporé tel quel ou sous forme d'une solution aqueuse. A titre de tels sels, on peut citer notamment les acétates et les lactates tels que l'acétate de sodium et le lactate de sodium ainsi que leurs mélanges qui sont préférés par la demanderesse, cette liste étant toutefois également purement illustrative et non limitative.

La composition selon l'invention peut contenir à la fois un amidon thermoplastique cationique ou anionique et un composé ionique inorganique et/ou un composé ionique organique. Tout autre type de mélange de composés ioniques peut être mis en oeuvre dans la composition selon l'invention.

La polyoléfine ou les polyoléfines utilisées pour réaliser les compositions conformes à l'invention peuvent être également quelconques et sont souvent choisies parmi les polymères ou copolymères de l'éthylène ou du propylène éventuellement modifié. La demanderesse préfère toutefois mettre en oeuvre des polyéthylènes et, en particulier, les polyéthylènes linéaires de faible densité (LLDPE), les polyéthylènes à très faible densité (VLDPE), les polyéthylènes de faible densité (LDPE) et leurs mélanges. De bons résultats ont été obtenus avec le LLDPE et ses mélanges avec le LDPE.

La teneur en polyoléfines des compositions conformes à l'invention ne dépasse de préférence pas 90 % en poids. Leur teneur n'est de préférence pas inférieure à 20 % en poids.

Les amidons utilisables pour l'obtention des amidons thermoplastiques des compositions conformes à l'invention peuvent également être quelconques. Ils peuvent notamment être d'origine naturelle ou végétale et être composés principalement d'amylose et/ou d'amylopectine selon leur origine biologique.

Ces amidons peuvent être déstructurés, prégélifiés ou modifiés. Ils peuvent aussi faire l'objet d'adjonction d'eau ou de plastifiants comme décrits dans la demande de brevet WO-A-90 10 019 publiée le 7 septembre 1990. A titre de plastifiants on peut citer, à titre non limitatif, la glycérine, la diglycérine, les polyglycérines, le sorbitol ainsi que les mélanges de ceux-ci. L'amidon thermoplastique mis en oeuvre dans les compositions peut contenir jusqu'à 50 % en poids et, de préférence, de 5 à 45 % en poids d'un ou de plusieurs plastifiants par rapport au poids total d'amidon thermoplastique.

La teneur en poids d'amidon thermoplastique des compositions conformes à l'invention est de préférence égale ou inférieure à 50 %.

On utilise au moins 1 % et le plus souvent au moins 5 % d'amidon thermoplastique dans les compositions conformes à l'invention.

Les compositions conformes à l'invention contiennent de préférence de 1 à 20 % en poids d'agent compatibilisant.

Les compositions conformes à l'invention peuvent, en outre, contenir d'autres additifs usuels tels que des lubrifiants, des stabilisants, des pigments et des colorants. Leur teneur peut être variable. Souvent elle ne dépassera pas 10 % du poids total de la composition.

Il a, en outre, été constaté, que les compositions conformes à l'invention peuvent également contenir des matières de charges minérales sans nuire aux propriétés de soudabilité.

Le compoundage des compositions conformes à l'invention peut être réalisé sur des compoundeuses double vis co- ou contra-rotatives ou sur des malaxeurs externes ou internes.

En général, l'ordre ou le moment d'introduction dans la trémie de la compoundeuse des constituants de la composition selon l'invention n'est pas critique.

A titre d'exemple non limitatif, la compoundeuse peut être alimentée directement par l'amidon thermoplastique précompoundé, la polyoléfine, l'agent de couplage, le sel inorganique ou organique, des lubrifiants et des stabilisants, ou encore par l'amidon imprégné de son plastifiant, puis par la polyoléfine et les autres composants du mélange, ou encore par l'amidon thermoplastique précompoundé contenant une certaine quantité de l'agent de couplage, de la polyoléfine et du composé ionique puis le solde de l'agent de couplage, de la polyoléfine et des autres composants.

Lorsque le composé ionique comprend un sel organique ou inorganique, on peut mélanger au préalable celui-ci avec l'amidon thermoplastique ou même le précompounder .

Le compound ainsi obtenu qui contient l'amidon thermoplastique et le sel organique ou inorganique peut aussi être exploité comme un mélange-maître et être incorporé dans une polyoléfine pour autant que les proportions pondérales de ses constituants soient telles que le mélange du compound avec la polyoléfine conduise à une composition finale conforme à l'invention.

L'agent compatibilisant peut dans ce cas être présent dans le compound et ainsi faire partie du mélange-maître. On peut également le mettre en oeuvre à l'étape d'incorporation de la polyoléfine.

La mise en oeuvre des compositions selon l'invention peut être réalisée par calandrage ou par extrusion.

Les compositions conformes à l'invention peuvent notamment être exploitées pour constituer la couche interne de structures multicouches par exemple de type sandwich dans lesquelles les couches externes sont constituées par des polymères réputés non soudables en haute fréquence et ainsi néanmoins conduire à des structures multicouches soudables en haute fréquence pour autant que l'épaisseur totale des couches non soudables ne dépasse pas 85 % de l'épaisseur totale de la structure multicouche. Les compositions selon l'invention peuvent évidemment aussi convenir pour la réalisation de structures multicouches du type sandwich ou autre soudables en haute fréquence dans lesquelles les compositions selon l'invention sont utilisées pour constituer la ou les couches externes.

Les compositions conformes à l'invention conviennent particulièrement pour la production de films ou de feuilles qui peuvent trouver des applications dans de nombreux domaines tels que l'emballage et la papeterie.

En outre, la présence d'amidon thermoplastique dans ces compositions conduit à des articles présentant une biofragilisation améliorée dans le temps.

Les compositions conformes à l'invention sont, en outre illustrées par les exemples de réalisation pratique qui vont suivre dans lesquels les concentrations mentionnées sont des concentrations pondérales. Les exemples 1R, 2R et 3R sont donnés à titre de comparaison.

### Exemple 1R

Un mélange physique comprenant 56 g de polyéthylène linéaire basse densité (LLDPE) de la marque **DOWLEX** ^{**R**} **2047 E** (commercialisé par la Société DOW CHEMICALS) et 14 g d'un copolymère éthylène/ester acrylique/anhydride maléique **LOTADER** ^{**R**} **3210** (commercialisé par la Société ATOCHEM) est introduit dans un malaxeur interne de laboratoire plastographe **BRABENDER** ^{**R**} conditionné à une température constante de 130 °C, puis malaxé pendant 10 minutes sous une pression d'1 kg/cm² (9,81.10⁴ Pa) à une vitesse de rotation des cames de 50 tours/minute. Environ 8 g de la masse fondue sont ensuite prélevés, refroidis et pressés entre deux feuilles de polytéréphtalate d'éthylène **MYLAR®** (produit par la Société Du PONT DE NEMOURS) à la température de décharge pour obtenir un film de 350 µm d'épaisseur.

Pour évaluer la soudabilité en haute fréquence, le film obtenu, après retrait des feuilles de polytéréphtalate d'éthylène, est coupé en deux et les portions obtenues sont pressées l'une contre l'autre entre l'électrode (110 mm de long et 1 mm de large) et la platine d'une soudeuse électronique de type **MYSTERE® 30** capable de fournir une puissance utile de 0,9 kW. La haute tension avec une fréquence de 27,12 MHz est appliquée pendant une demi-seconde de pré-soudure (avec une puissance moindre), puis pendant 3 secondes à la puissance maximale.

On constate que la soudure obtenue est de très mauvaise qualité et que les deux morceaux de film mis en contact se décollent sans effort. De plus, directement après la soudure, aucun échauffement n'est détecté à l'endroit de la soudure.

### Exemple 2R

On procède comme dans l'exemple 1, sauf que la composition du mélange est de 75 % de polyéthylène linéaire basse densité **ESCORENE® LL1004YB** (commercialisé par la Société EXXON), de 12 % de copolymère éthylène/ester acrylique/anhydride maléique **LOTADER® 3210**, de 5 % de glycérine et de 8 % (soit environ 0,6 moles/kg de la composition) d'acétate de sodium (sel trihydraté), et que l'on maintient la haute tension pendant 8 secondes.

Après retrait de la soudeuse électronique, on constate de nouveau que les portions de film ne sont nullement soudées entre elles.

### Exemple 3R

On procède comme dans l'exemple 2 mais avec un mélange comprenant 70 % de polyéthylène **ESCORENE® LL1004YB**, 5 % de compatibilisant **LOTADER® 3210**, 16,7 % d'un amidon de maïs riche en amylopectine du type **WAXILYS® 100** (commercialisé par la Société ROQUETTE FRERES), 5,5 % de sorbitol et 2,8 % de glycérine.

Après retrait de la soudeuse électronique, on constate de nouveau que les portions de film ne sont nullement soudées entre elles.

Les exemples 1R, 2R et 3R montrent que des compositions comprenant une polyoléfine et un agent compatibilisant ou une polyoléfine, un agent compatibilisant, un plastifiant et un sel organique ionique ou encore une polyoléfine, un agent compatibilisant et un amidon thermoplastique (en faible proportion) ne conduisent pas à des articles soudables en haute fréquence.

### Exemple 4

70 g d'une composition contenant 45 % de LLDPE **DOWLEX® 2047E**, 5 % de compatibilisant **LOTADER® 3210**, 30 % d'amidon **WAXILYS® 100**, 15 % de sorbitol et 5 % d'acétate de sodium trihydraté (concentration en anions et en cations de 0,74 mole/kg) sont malaxés comme décrit dans l'exemple 1.

Un film préparé à partir de cette composition selon la même procédure que dans les exemples précédents est soudé en haute fréquence avec une puissance de 90 % du maximum, un temps de présoudure d'une demi-seconde (pour l'échauffement) et un temps de soudure de 1 seconde.

Après retrait de la soudeuse électronique, on constate que la ligne de soudure est d'une largeur bien régulière et tient fortement. On n'arrive pas à détacher les deux portions de feuilles par arrachage car celles-ci finissent par se déchirer le long de la ligne de soudure sans que la soudure ne cède. De plus, l'échantillon est transparent, avec une légère coloration jaune.

### Exemple 5

On obtient les mêmes résultats que dans l'exemple 4 en remplaçant l'amidon **WAXILYS® 100** par de l'amidon natif de maïs. Par exemple, une formulation contenant 30 % d'amidon alimentaire, 40 % de polyéthylène **DOWLEX® 2047E**, 10 % du compatibilisant **LOTADER® 3210**, 15 % de polyglycérine et 5 % d'une solution aqueuse à 80 % de lactate de sodium donne des portions de film qui se soudent entre elles parfaitement en 2 secondes et ce à 70 % de la puissance maximum de la soudeuse électronique.

### Exemple 6

On obtient également une excellente soudure si l'on procède comme dans l'exemple 4 mais au départ d'une composition comprenant 40 % de LLDPE **DOWLEX® 2047E**, 10 % de compatibilisant **LOTADER® 3210**, 17,5 % de polyglycérine et 32,5 % de l'amidon cationique **HI-CAT 260** (commercialisé par la Société ROQUETTE FRERES). L'amidon **HI-CAT 260** est un amidon de maïs riche en amylose modifié de façon telle que de 1 % à 1,5 % des fonctions hydroxyles de l'amidon soient substituées par des groupements -O-CH₂-CHOH-CH₂-N⁺R₃ Cl⁻. Dans la composition mise en oeuvre, la concentration d'anions Cl⁻ est donc d'environ 0,08 moles/kg. Bien que la qualité de la soudure soit satisfaisante, on constate que la résistance à la déchirure du film est moins satisfaisante, que la transparence est un peu moindre, et que l'échantillon est blanchâtre.

### Exemple 7

On procède comme dans l'exemple 1 mais avec une composition comprenant 41 % de polyéthylène **DOWLEX® 2047E**, 10 % de compatibilisant **LOTADER® 3210**, 31 % d'amidon **WAXILYS® 100**, 10 % de sorbitol, 5 % de glycérine et 3 % de chlorure de sodium. La concentration en sel est cette fois de 0,5 moles/kg.

Bien que tout le sel ne soit pas dissous dans la composition, on obtient une très belle soudure en 1 seconde avec 90 % de la puissance maximale sur la soudeuse électronique MYSTERE 30.

### Exemple 8

On opère comme dans l'exemple 7, mais en remplaçant le chlorure de sodium par du chlorure de calcium (concentration molaire de CaCl₂ de 0,23 moles par kg de composition).

On constate que la soudure est un peu moins bonne et que le film se déchire assez aisément le long de la soudure. De plus, il est nettement moins transparent que l'échantillon cité dans l'exemple 7.

### Exemple 9

On opère comme dans l'exemple 7 mais en remplaçant le chlorure de sodium par de l'acétate de sodium trihydraté (à la même concentration molaire).

On constate cette fois que la soudure est excellente en 1 seconde avec 80 % de la puissance maximale.

### Exemple 10

On met en oeuvre une composition comprenant : 70 % de LLDPE **ESCORENE® LL1004YB**, 5 % de compatibilisant **LOTADER® 3210**, 15 % de l'amidon **WAXILYS® 100**, 4,5 % de sorbitol, 3 % de glycérine et 2,5 % d'acétate de sodium trihydraté (soit 0,18 mole de sel par kilogramme de la composition).

On constate que l'on obtient une soudure de très bonne qualité en appliquant 90 % de la puissance maximale pendant 1,5 seconde.

### Exemple 11

Si on double la quantité d'acétate de sodium dans la composition de l'exemple 10 (aux dépens d'une masse égale de sorbitol), on constate seulement que la soudure s'effectue un peu plus lentement (90 % de puissance pendant 2 secondes).

### Exemple 12

Si par contre on réduit la quantité d'acétate de sodium dans la composition de l'exemple 10 jusqu'à 1,4 % de la masse totale (en augmentant la concentration de l'amidon à 15,6 % et celle du sorbitol à 5 %), on constate que la soudeuse électronique doit opérer à 95 % de la puissance maximum pendant au moins 2 secondes pour souder convenablement les deux portions de film.

### Exemple 13

On obtient une soudure excellente à 90 % de la puissance maximale appliquée pendant 1,5 seconde entre deux portions d'un film produit comme dans l'exemple 1 mais à partir d'une composition comprenant 70 % de polyéthylène linéaire de basse densité du type **ESCORENE® LL1004YB**, 5 % de compatibilisant **LOTADER® 3210**, 13,5 % d'amidon **WAXILYS® 100**, 4,5 % de sorbitol, 2,3 % de glycérine, 4,1 % d'acétate de sodium trihydraté et 0,6 % de chlorure de sodium (pour une concentration en anions et en cations totale de 0,8 mole/kg).

### Exemple 14

Une composition comprenant 72,5 % de polyéthylène **ESCORENE® LL1004YB**, 2,5 % de compatibilisant **LOTADER® 3210**, 15 % d'amidon **WAXILYS® 100**, 5 % de sorbitol, 3 % de glycérine, et 2 % d'une solution aqueuse à 25 % de chlorure de sodium, de chlorure de potassium ou de chlorure d'ammonium est traitée selon la procédure décrite dans l'exemple 1.

On constate que 90 % de la puissance maximum sont requis pendant un temps de soudure de 2 secondes pour obtenir une soudure résistante.

Les concentrations molaires de chlorure de sodium, de chlorure de potassium ou chlorure d'ammonium dans les compositions sont respectivement de 0,085 mole/kg, de 0,067 mole/kg et 0,093 mole/kg.

### Exemple 15

On met en oeuvre une composition comprenant : 51 % de polyéthylène linéaire de basse densité **ESCORENE® LL1004YB**, 21,5 % de polyéthylène de basse densité (du type MCA203 fourni par la Société BRITISH PETROLEUM), 2,5 % de compatibilisant **LOTADER® 3210**, 14 % d'amidon de maïs cireux **WAXILYS® 100**, 4,7 % de sorbitol, 2,3 % de glycérine et 4 % (0,3 mole/kg de la composition) d'acétate de sodium trihydraté.

On constate que la soudure est de bonne qualité si la puissance maximale de la soudeuse électronique est maintenue pendant 2 secondes. La transparence des feuilles est encore améliorée par rapport aux compositions sans LDPE (exemple 11 par exemple).

### Exemple 16

On réalise un mélange comprenant de l'amidon à haute teneur en amylopectine (**WAXILYS® 100**), de la polyglycérine et une solution aqueuse de lactate de sodium à 80 % dans les proportions 24:12:5. Ce mélange physique (WAP) est ensuite compoundé sur une extrudeuse **CLEXTRAL® BC21** pour obtenir des granules contenant finalement 25 % de WAP, 60 % de LLDPE **DOWLEX® 2047E** et 15 % de compatibilisant **LOTADER® 3210**. La température matière à la sortie de l'extrudeuse est de 185 °C. A partir de ces granules, qui contiennent donc 0,4 mole/kg d'anions et de cations, on produit enfin un film de 350 µm d'épaisseur avec une extrudeuse monovis **TROESTER® UP30** ce film étant directement refroidi à 70 °C au moyen d'un cylindre de trempage. Le produit obtenu est brun jaune, mais pas opaque.

On constate que la soudabilité haute fréquence du film est excellente à 90 % de la puissance maximale de la soudeuse électronique appliquée pendant 2 secondes et que cette soudabilité reste bonne même trois mois après la fabrication du film sans qu'il y ait apparition de bulles.

### Exemple 17

Des granules contenant 50 % de WAP (obtenus selon l'exemple 16), 40 % de LLDPE **DOWLEX® 2047E** et 10 % de **LOTADER® 3210**, sont compoundés sur une ligne **CLEXTRAL®** comme indiqué dans l'exemple 16.

On coextrude alors une gaine à trois couches de type A-B-A, le coeur "B" étant constitué à partir de ces granules et les couches externes "A" étant réalisées à partir de LLDPE **DOWLEX® 2047E**.

Les épaisseurs moyennes de la gaine produite sont respectivement de 60 µm, 125 µm et 50 µm pour les couches extérieures, médiane et intérieure.

La fermeture par soudage haute fréquence de la gaine peut être obtenue avec une soudeuse **MYSTERE® 30** en appliquant 90 % de la puissance pendant 1,5 seconde (avec 0,5 seconde de présoudure).

On constate que la soudure est excellente bien que les couches extérieures soient réputées non soudables par haute fréquence.

## Revendications

1. Compositions polymériques pour la production d'articles soudables en haute fréquence, comprenant :
- de 10 à 98 % en poids d'au moins une polyoléfine,
- de 1 à 60 % en poids d'au moins un amidon thermoplastique,
- de 0,5 à 30 % en poids d'au moins un agent de couplage choisi dans le groupe formé par les polyoléfines modifiées par greffage d'anhydride maléique et par les copolymères et terpolymères d'éthylène contenant des unités dérivées de l'anhydride maléique;
et contenant au moins un composé ionique dans une teneur telle que la concentration en anions et en cations dans les compositions soit de 0,002 à 5 moles/kg.

2. Compositions polymériques selon la revendication 1 caractérisées en ce que le composé ionique est constitué en tout ou en partie par l'amidon thermoplastique, ce dernier étant, dans ce cas, choisi dans le groupe formé par les amidons thermoplastiques cationiques et les amidons thermoplastiques anioniques.

3. Compositions polymériques selon la revendication 1 caractérisées en ce que le composé ionique est un sel inorganique.

4. Compositions polymériques selon la revendication 1 caractérisées en ce que le composé ionique est un sel organique.

5. Compositions polymériques selon la revendication 1 caractérisées en ce que la polyoléfine est choisie dans le groupe formé par les polyéthylènes linéaires de faible densité (LLDPE), les polyéthylènes à très faible densité (VLDPE), les polyéthylènes de faible densité (LDPE) et leurs mélanges.

6. Compositions polymériques selon la revendication 1 caractérisées en ce que l'amidon thermoplastique contient jusqu'à 50 % en poids de plastifiants par rapport au poids total d'amidon thermoplastique.

7. Maître-mélange utilisé pour la préparation des compositons selon l'une quelconque des revendications 1 à 6 caractérisé en ce qu'il contient au moins un amidon thermoplastique et au moins un composé ionique.

8. A titre de produits industriels les articles soudables en haute fréquence tels que des films mono- ou multicouches obtenus à partir des compositions selon l'une quelconque des revendications 1 à 6.

## Patentansprüche

1. Polymerzusammensetzungen zur Herstellung hochfrequenzverschweißbarer Gegenstände, die
- 10 bis 98 Gew.-% wenigstens eines Polyolefins,
- 1 bis 60 Gew.-% wenigstens einer thermoplastischen Stärke,
- 0,5 bis 30 Gew.-% wenigstens eines Kopplungsmittels, das aus der Gruppe ausgewählt ist, die von den Polyolefinen, die durch Pfropfung mit Maleinsäureanhydrid modifiziert sind, und den Ethylencopolymeren und -terpolymeren, die von Maleinsäureanhydrid abgeleitete Einheiten enthalten, gebildet wird,
umfassen und wenigstens eine ionische Verbindung in einem solchen Gehalt enthalten, daß die Konzentration an Anionen und Kationen in den Zusammensetzungen 0,002 bis 5 Mol/kg beträgt.

2. Polymerzusammensetzungen gemäß Anspruch 1, dadurch gekennzeichnet, daß die ionische Verbindung ganz oder teilweise von der thermoplastischen Stärke gebildet wird, wobei diese letztere in diesem Fall aus der Gruppe ausgewählt ist, die von den kationischen thermoplastischen Stärken und den anionischen thermoplastischen Stärken gebildet wird.

3. Polymerzusammensetzungen gemäß Anspruch 1, dadurch gekennzeichnet, daß die ionische Verbindung ein anorganisches Salz ist.

4. Polymerzusammensetzungen gemäß Anspruch 1, dadurch gekennzeichnet, daß die ionische Verbindung ein organisches Salz ist.

5. Polymerzusammensetzungen gemäß Anspruch 1, dadurch gekennzeichnet, daß das Polyolefin aus der Gruppe ausgewählt ist, die von den linearen Polyethylenen niedriger Dichte (LLDPE), den Polyethylenen sehr niedriger Dichte (VLDPE), den Polyethylenen niedriger Dichte (LDPE) und deren Gemischen gebildet wird.

6. Polymerzusammensetzungen gemäß Anspruch 1, dadurch gekennzeichnet, daß die thermoplastische Stärke, bezogen auf das Gesamtgewicht an thermoplastischer Stärke, bis zu 50 Gew.-% Weichmacher enthält.

7. Masterbatch, der zur Herstellung der Zusammensetzungen gemäß einem der Ansprüche 1 bis 6 verwendet wird, dadurch gekennzeichnet, daß er wenigstens eine thermoplastische Stärke und wenigstens eine ionische Verbindung enthält.

8. Als industrielle Produkte die hochfrequenzverschweißbaren Gegenstände, wie ein- oder mehrschichtige Folien, die aus den Zusammensetzungen gemäß einem der Ansprüche 1 bis 6 erhalten werden.

## Claims

1. Polymeric compositions for the production of high-frequency-weldable articles comprising :
- from 10 to 98 % by weight of at least one polyolefin;
- from 1 to 60 % by weight of at least one thermoplastic starch;
- from 0.5 to 30 % by weight of at least one coupling agent chosen from the group formed by the polyolefins modified by grafting with maleic anhydride and the copolymers and terpolymers of ethylene containg units derived from maleic anhydride; and containg at least one ionic compound in a content such that the concentration of anions and of cations in the compositions is from 0.002 to 5 mol/kg.

2. Polymeric compositions according to Claim 1, characterized in that the ionic compound consists, entirely or in part, of thermoplastic starch, the latter being, in this case, chosen from the group formed by cationic thermoplastic starches and anionic thermoplastic starches.

3. Polymeric compositions according to Claim 1, characterized in that the ionic compound is an inorganic salt.

4. Polymeric compositions according to Claim 1, characterized in that the ionic compound is an organic salt.

5. Polymeric compositions according to Claim 1, characterized in that the polyolefin is chosen from the group formed by linear low density polyethylenes (LLDPE), very low density polyethylenes (VLDPE), low density polyethylenes (LDPE) and their mixtures.

6. Polymeric compositions according to Claim 1, characterized in that the thermoplastic starch contains up to 50 % by weight of plasticizers with respect to the total weight of thermoplastic starch.

7. Master mixture used for the preparation of the compositions according to any one of Claims 1 to 6, characterized in that it contains at least one thermoplastic starch and at least one ionic compound.

8. As examples of industrial products, the high-frequency-weldable articles such as mono- or multilayer films obtained from the compositions according to any one of Claims 1 to 6.
